# EUROPEAN PATENT APPLICATION

(11) **EP 2 613 545 A2**
(43) Date of publication of application: **10.07.2013**
(21) Application number: 12197027.1
(22) Date of filing: 13.12.2012
(51) Int. Cl.: H04N 21/41, H04N 21/436

(54) **Remote control, remote control method and display device**

(30) Priority: 04.01.2012 KR 20120001227
(71) Applicant: Samsung Electronics Co., Ltd., Gyeonggi-do 443-742 (KR)
(72) Inventor: Lee, Ki-taek, Gyeonggi-do (KR)
(74) Representative: Bray, Richard Anthony

(57) **Abstract**

The remote control device includes a signal transmitting-receiving unit which transmits a request signal requesting information for controlling an electronic device to the electronic device or a relay device which relays the information, and receives information from the electronic device or the relay device; and a control unit which stops operating a signal receiving unit of the signal transmitting-receiving unit during transmission of the request signal, and resumes operating the signal receiving unit again when the transmission of the request signal is completed.

## Description

### CROSS-REFERENCE TO RELATED APPLICATION

This application claims priority from Korean Patent Application No. 10-2012-0001227, filed on January 4, 2012, in the Korean Intellectual Property Office, the disclosure of which is incorporated herein by reference in its entirety.

### BACKGROUND

### 1. Field

Methods and apparatuses consistent with exemplary embodiments relate to remote control of electronic devices, and more particularly, to a two-way wireless communication via a remote control device, in which interference of a transmitting signal and a receiving signal is prevented.

### 2. Description of the Prior Art

As high-speed internet expands to our homes and data transmission speed improves at an increasing pace, high expectations are being placed on developing home network systems where remote control of home appliances including high-definition (HD) digital television (DTV) broadcasting, Video On Demand (VOD) services, and high-speed Internet can be done in one terminal.

Each of the home electronic appliances of a home network system provides a remote control so that a user can use various services from a distance. A related art remote control uses a one-way communication method of wirelessly transmitting a predetermined command to an object to be controlled which is located in a distance, using a 38kHz band infrared communication method, as for example, according to Infrared Data Association (IrDa). A user presses buttons which include number key buttons and various functional buttons to control various functions of the object. For instance, in case of a TV, the user can control a channel, volume, brightness, channel recall, etc.

However, the related art remote control devices which use one-way communication methods cannot provide the two-way control service, which is desired in home network systems. For this reason, recently, research and development have been made on two-way remote controls where functions of receiving signals and responding to the receiving signals using various methods have been proposed.

Specifically, the two-way remote control devices have been introduced which integrate into one remote control all of the remote control functions of numerous devices installed in a home having a home network system so that a user could easily control a device through an intuitive and convenient user interface regardless of where the user is in the house, directly see the result of his/her request for control, and see states of the numerous devices in the house through monitoring.

However, in such related art two-way remote control devices, a transmitting unit which transmits signals and a receiving unit which receives signals are designed to be located near each other, in the remote control device. Thus, transmitting signals (Tx) may affect the receiving unit, causing interruption which has not been intended. Accordingly, the remote control may misconceive the transmitting signal (Tx) which is to be sent to an external device as a receiving signal (Rx), and also may fail to properly process the receiving signals coming from other external devices such as a set top box.

One solution is to make the size of the remote control device larger or provide a separate isolating structure in order to reduce the effect of the signals on each other. However, such modifications are costly and undesirable in view of general miniaturization trend of the electronic components.

### SUMMARY

Exemplary embodiments address at least the above problems and/or disadvantages and other advantages not described above. Also, an exemplary embodiment is not required to overcome the disadvantages described above, and an exemplary embodiment may not overcome any of the problems described above.

According to the present invention there is provided an apparatus and method as set forth in the appended claims. Other features of the invention will be apparent from the dependent claims, and the description which follows.

One or more exemplary embodiments relate to a remote control which temporarily stops a receiving unit when transmitting a transmitting signal, and operates the receiving unit again when the transmission of the transmission signal is completed, thereby preventing any effects by the transmitting signal to the receiving signal, and a remote control method, and display device thereof.

According to an aspect of an exemplary embodiment, a remote control may include a signal transmitting-receiving unit which transmits a request signal which requests information necessary for controlling an electronic device to the electronic device or relay device which relays the information, and receives the information from the electronic device or relay device; and a control unit which stops operating a signal receiving unit of the signal transmitting-receiving unit during transmission of the request signal, and operates the signal receiving unit again when the transmission of the request signal is completed.

The signal transmitting-receiving unit may perform short-distance wireless communication using any one communication method of Zigbee, Bluetooth, IrDA, Radio Frequency (RF) and UWB methods.

The remote control may further include a key information processing unit which generates information according to a user's key input and provides the generated information to the control unit.

The remote control may further include a signal generating unit which generates the request signal.

The control unit may determine whether or not generating the request signal is necessary and stop operating the signal receiving unit according to the result of the determination, and determine whether or not the transmission of the request signal is completed and operate the signal receiving unit again according to the result of the determination.

The control unit may determine a point when information according to the user's key input is input in order to determine whether or not the transmission of the request signal is necessary.

The control unit may use any one of the point when the generation of the request signal is completed, the point when the request signal is transmitted from the control unit to the signal transmitting-receiving unit, and the point when the request signal is transmitted from the signal transmitting-receiving unit to the electronic device or relay device, in order to determine whether or not the generation of the request signal is completed.

The signal transmitting-receiving unit may further include a switching unit which shuts off or opens a signal processing route of the signal receiving unit according to a control of the control unit.

According to an aspect of an exemplary embodiment, a remote control method may include determining whether or not a request signal which requests for information necessary for controlling an electronic device is generated; stopping operating a signal receiving unit, if the request signal is generated, as a result of the determination; determining whether or not the transmission of the request signal is completed; and operating the signal receiving unit, if the transmission of the request signal is completed, as a result of the determination.

The determining the generation of the request signal may determine the generation of the request signal by determining whether or not there is information input from a user's key input.

The determining whether or not the transmission of the request signal is completed may determine the point when the transmission of the request signal is completed by regularly checking at a certain interval.

The request signal may be a short distance wireless communication signal by any one communication method of Zigbee, Bluetooth, IrDA, RF and UWB methods.

According to an aspect of an exemplary embodiment, a display device may include a signal transmitting-receiving unit which transmits a request signal which requests for information necessary for controlling an electronic device (e.g. an electronic device located nearly/nearby), and receives the information as a response to the request signal; and a control unit which stops operating a signal receiving unit of the signal transmitting-receiving unit during transmission of the request signal, and operates the signal receiving unit when the transmission of the request signal is completed.

### BRIEF DESCRIPTION OF THE DRAWINGS

The above and/or other aspects will be become more apparent by describing certain exemplary embodiments, with reference to the accompanying drawings, in which:

FIG. 1 is a view illustrating a broadcasting system according to an exemplary embodiment;

FIG. 2 is a block diagram illustrating a structure of a remote control device of FIG. 1; and

FIG. 3 is a remote control method according to an exemplary embodiment.

### DETAILED DESCRIPTION

Certain exemplary embodiments are described in detail below with reference to the accompanying drawings.

In the following description, same drawing reference numerals are used for the same elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

Although a few embodiments of the present invention have been shown and described, it would be appreciated by those skilled in the art that changes may be made in this embodiment without departing from the principles and spirit of the invention, the scope of which is defined in the claims and their equivalents.

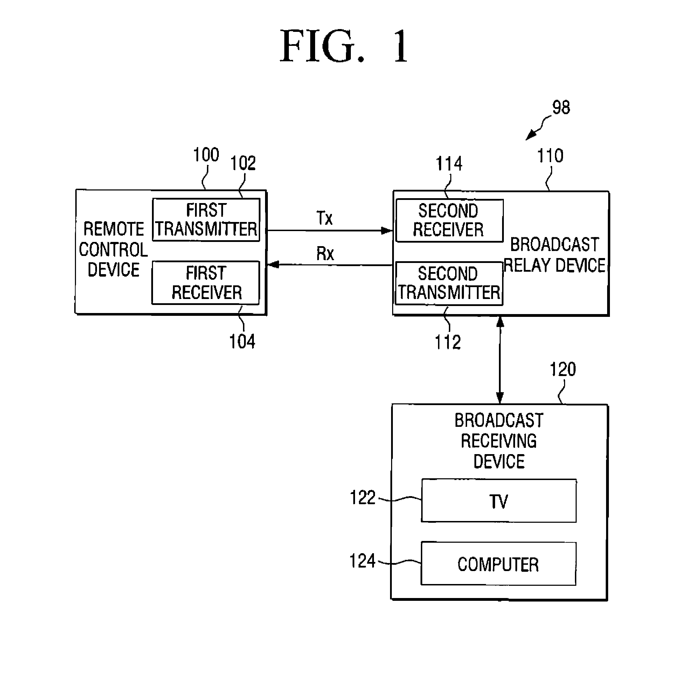

FIG. 1 is a view illustrating a broadcasting system according to an exemplary embodiment.

As illustrated in FIG. 1, a broadcasting system 98 according to an exemplary embodiment may include a remote control device 100 including a first transmitter 102 and a first receiver 104 and broadcast relay device 110 including a second transmitter 112 and a second receiver 114.

The broadcasting system 98 may further include a broadcast receiving device 120 including, for example, at least one of a TV 122 and a computer 124 in communication with the broadcast relay device 110. Although only the TV 122 and the computer 124 are illustrated in FIG. 1, an exemplary embodiment is not limited thereto and the broadcast receiving device 120 may include other devices capable of receiving the broadcast or the content.

The remote control device 100 according to an exemplary embodiment is, for example, a two-way remote control, in which when a user requests for certain information to be provided from the broadcast relay device 110, the remote control device 100 transmits a request signal for such a request to the broadcast relay device 110, and the broadcast relay device 110 transmits related information to a TV according to the request, so that the user can see the information he/she wants.

In this process, the remote control device 100 could receive a response signal from the broadcast relay device 110 as a response to a previous request. In a case where the remote control device 100 includes a separate display unit for displaying images, it may receive signals other than the response signal. For instance, if the remote control device 100 requested a program necessary for controlling a certain broadcast device via a request sent to the broadcast relay device 110, the broadcast relay device 110 may receive the corresponding program information through an external server and provide it to the remote control device 100. Otherwise, the broadcast relay device 110 may receive advertisement information regarding a certain product and display it on the display unit.

Accordingly, when, for instance, the remote control device 100 according to an exemplary embodiment generates and transmits a transmitting signal (Tx) to the broadcast relay device 110 according to a user's request for certain information, it may stop operating a first receiver 104 until the transmission of the corresponding transmitting signal is completed, to the broadcast relay device 110. For instance, the remote control device 100 may stop operating the receiver 104 until it completes a 'send_Tx' command to transmit the transmitting signal (Tx).

Accordingly, the remote control device 100 may prevent interference which may occur due to an effect on the receiver 104 which receives signals as the remote control device 100 transmits signals through a first transmitter 102, without making the size of the remote control device 100 bigger or making a separate isolating structure in order to reduce the effect of the signals on each other, thus, providing a cost-effective solution without enlarging the size of the device.

The broadcast relay device 110 is, for instance, a set top box, which may process a signal requested by the remote control device 100, that is a transmitting signal, and process corresponding information according to the request, and transmit a response signal as a response thereto to the remote control device 100. Herein, the response signal may include program information for controlling a certain broadcast receiving device requested by the remote control device 100. Furthermore, in a case where the remote control device 100 has a display unit for displaying images, the broadcast relay device 110 may transmit the response signal and an additional signal, as, for instance, advertisement information, to the remote control device 100.

For example, the user of the remote control device 100 requests for information on a certain broadcast corresponding to channel 11 through a key input. Then, the broadcast relay device 110 receives a corresponding request signal from the remote control device 100 and outputs related information to a broadcast receiving device 120, such as a TV, synchronically with channel 11, In this process, the broadcast relay device 110 may transmit the response signal to the remote control device 100 when, for instance, a synchronization process is completed. Otherwise, in a case where the remote control device 100 requested for program information necessary for controlling a certain broadcast receiving device, the broadcast relay device 110 may connect to an external server, receive the corresponding program information, and provide it to the remote control device 100.

Furthermore, the broadcast relay device 110 may select one of a plurality of broadcast receiving devices according to a request by the user using the remote control device 100, and process related information. For instance, in a case of receiving a ground-wave, cable, and/or Internet broadcast, the broadcast relay device 110 may select at least one broadcast receiving device of among a TV 122 and computer 124, and output corresponding broadcast through the selected receiving device. As aforementioned, the broadcast relay device 110 becomes able to set various routes and output broadcast according to a user's request input through the remote control device 100.

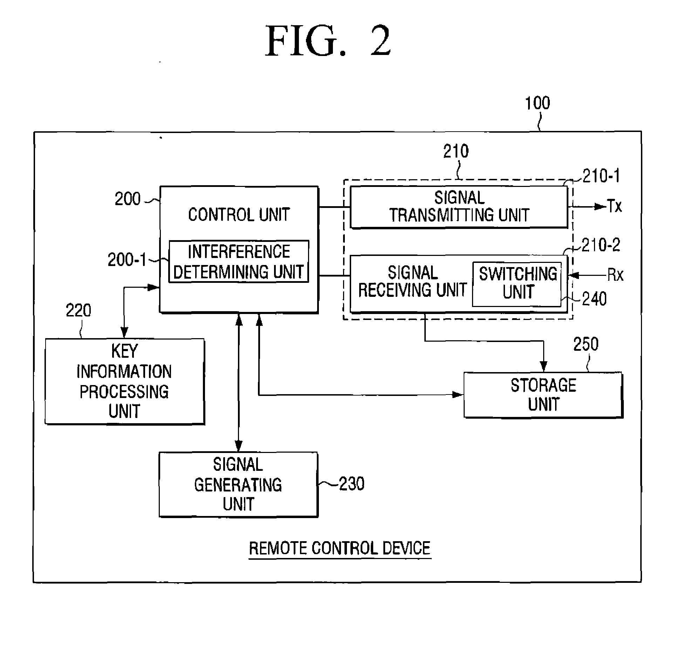

FIG. 2 is a block diagram illustrating a structure of the remote control device of FIG. 1.

With reference to FIGS. 1 and 2, the remote control device 100 includes a control unit 200 such as a controller, and a signal transmitting-receiving unit 210 such as a signal transceiver, including a signal transmitting device 210-1 such as a signal transmitter and a signal receiving device 210-2 such as a signal receiver. The remote control device 100 may further include at least one of a key information processing unit 220 and a signal generating unit 230.

Herein, the control unit 200 controls the overall operations of the remote control device 100. For instance, the control unit 200 processes information that the user selected through a key input button and generates a transmitting signal, and then outputs the generated transmitting signal to a signal transmitting unit 210-1 of the signal transmitting-receiving unit 210. The control unit 200 may receive information input through the key input button of the key information processing unit 220, and may perform control so that generating the transmitting signal is made through the signal generating unit 230. Furthermore, the control unit 200 may receive a signal from a signal receiving unit 210-2, as a response signal to a request signal for certain information that the user requested, and may also process additional image information signal separate from the response signal.

Furthermore, when generating a transmitting signal or generating the transmitting signal and outputting it to the signal transmitting unit 210-1, the control unit 200 may stop operating the signal receiving unit 210-2. For example, when it is determined that a transmitting signal is being generated after performing a process of determining whether a generation of the transmitting signal has been requested or initiated, the control unit 200 may stop operations of the signal receiving unit 210-2 until processing of the transmitting signal is completed, or may regularly determine whether there is signal received from the signal receiving unit 210-2 and stop operating the signal receiving unit 210-2 when it is determined that there is a receiving signal. Herein, determining whether a transmitting signal is being generated may be understood as determining whether there is a user's request, or whether there is an input of a request signal according to a user's request from the key information processing unit 220.

In order to perform the aforementioned function, the control unit 200 may include an interference determining unit 200-1 inside of it, as illustrated in FIG. 2, and process corresponding signals. In a case of having an interference determining unit outside of it, the control unit 200 may process signals by controlling the interference determining unit. Therefore, an exemplary embodiment does not particularly limit how the control unit 200 controls the signal receiving unit 210-2 or forms the interference determining unit.

The signal transmitting-receiving unit 210 may include the signal transmitting unit 210-1 and the signal receiving unit 210-2, which may be communication modules. Herein, the communication module may use at least one of the methods of RF such as Zigbee, Bluetooth, IrDA, Ultra High Frequency (UHF), and Very High Frequency (VHF) and UWB. That is, a transmitting-receiving signal of the signal transmitting-receiving unit 210 may be a signal by a same communication method or by a different method.

The signal transmitting unit 210-1 receives a signal according to the user's request and transmits it to the broadcast relay device 110. The signal receiving unit 210-2 may receive a response signal as a response to the corresponding request from the broadcast relay device 110, or may receive a signal different from the response signal from the broadcast relay device 110.

Herein, the signal receiving unit 210-2 stops operating when the control unit 200 generates a transmitting signal according to a user's request or when the control unit 200 transmitted a signal to the signal transmitting unit 210-1, or when generating of the transmitting signal is completed or until signal transmission is completed in the signal transmitting unit 210-1. This is done under the control of the control unit 200.

In order to perform such operations, the remote control device 100 according to an exemplary embodiment may include a switching unit 240 including a switching element 242, and may include a memory, such as a storage unit 250. For example, the control unit 200 may control the switching element of the switching unit to shut out a signal processing route of the signal receiving unit 210-2, and may store the corresponding signal into a storage unit and process it without directly processing the corresponding signal when the transmitting signal is transmitted, and then delete the signal if it is determined to be an error signal.

As a result of the aforementioned configuration, the remote control device 100 according to an exemplary embodiment is capable of reducing the problem of misconceiving the corresponding signal as the receiving signal in the signal receiving unit 210-2 when transmitting the signal.

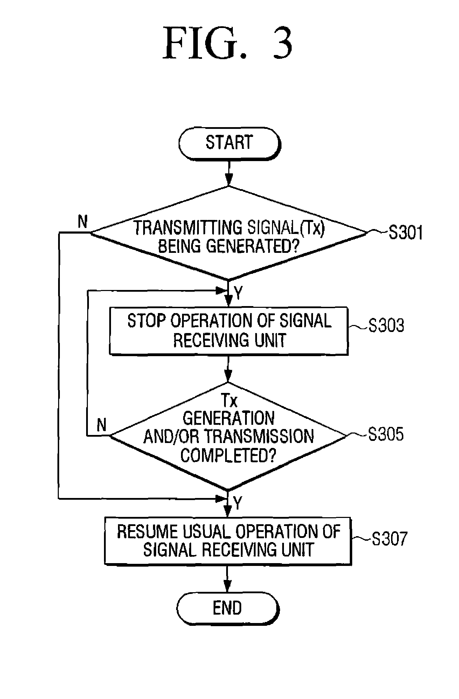

FIG. 3 is a view illustrating a remote control method according to an exemplary embodiment.

With reference to FIG. 3 along with FIGS. 1 and 2, the remote control device 100 according to an exemplary embodiment may first determine whether the transmitting signal is being generated (S301). In other words, the remote control device 100 performs in advance the process of determining whether generating the transmitting signal is expected to be initiated for preventing interference with the receiving signal when generating the transmitting signal. Such a process may, for instance, be performed by determining whether there is a key of the remote control device 100 input by the user, or by determining, by the control unit 200, whether there is key input information from the key information processing unit 220 which processes key input information.

When generating the transmitting signal is not expected as a result of determination, the remote control device 100 will process the signal received through the signal receiving unit 210-2 in an ordinary way.

However, when it is determined that generating the transmitting signal is necessary according to the user's request, the remote control device 100 may temporarily stop operating the signal receiving unit 210-2 (S303). In this process, the remote control device 100 may additionally determine whether there is a signal being received by the signal receiving unit 210-2 and stop operating the signal receiving unit 210-2 only when it is determined that there is a signal being received by the signal receiving unit 210-2. Herein, temporarily stopping the operation may be, for instance, shutting off the route of the signal being received by the signal receiving unit 210-2.

Thereafter, the remote control device 100 determines whether generating the corresponding transmitting signal is completed (S305). Herein, the point of determining whether generating the corresponding transmitting signal is completed may be one of the point when generation of the signal is completed, the point when the signal is provided from the control unit 200 to the signal transmitting unit 210-1, or the point when the signal is transmitted from the signal transmitting unit 210-1 to the broadcast relay device 110. Any method may be used as long as it reduces the interference to the receiving signal when generating the transmitting signal.

For instance, when it is determined that generation of the transmitting signal is not completed, while regularly checking whether the generation of the transmitting signal is completed at time intervals, or after determining that the transmitting signal is provided from the control unit 200 to the signal transmitting unit 210-1, the remote control device 100 maintains stopped operation of the signal receiving unit 210-2 until the generation or the transmission is completed.

However, when it is determined that generation of the transmitted signal is completed, the remote control device 100 operates the signal receiving unit 210-2 again (S307). Accordingly, the remote control device 100 becomes able to process signals received after the normal operation is resumed, or, in the case where the receiving signal is stored in the storage unit, becomes able to process the stored receiving signal.

Aforementioned was explanation on temporarily stopping receiving of a receiving signal after determining whether a transmitting signal is generated, according to an exemplary embodiment. However, the remote control device 100 according to an exemplary embodiment may determine whether there is a signal being received, and then determine whether a transmitting signal is being generated when there is a signal being received, and stop generation of the transmitting signal and then re-operating it again. In such a case, it would be possible to prevent the signal transmitting unit 210-1 affecting the receiving signal and thus prevent causing misconceiving the receiving signal as the transmitting signal, by excluding mutual interfering effects between the signal transmitting unit 210-1 and signal receiving unit 210-2.

Although an exemplary embodiment is explained with reference to the remote control device 100, the described above may also be applied to other display devices and broadcast receiving devices such as a broadcast relay device, computer, and TV, as long as it has the same signal transmitting-receiving system beyond the remote control device 100, and thus it is not limited to the remote control only.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A remote control device comprising:
a signal transmitting-receiving unit which transmits a request signal which requests information necessary for controlling an electronic device to the electronic device or a relay device which relays the information, and receives the information from the electronic device or the relay device; and
a control unit which stops operating a signal receiving unit of the signal transmitting-receiving unit during transmission of the request signal, and operates the signal receiving unit again when the transmission of the request signal is completed.

2. The remote control device according to claim 1, wherein the signal transmitting-receiving unit performs short-distance wireless communication using any one communication method of Zigbee, bluetooth, IrDA, RF(Radio Frequency) and ultra-wide band communication (UWB) methods.

3. The remote control device according to claim 1 or claim 2 further comprising a key information processing unit which generates information according to a user's key input and provides the generated information to the control unit.

4. The remote control device according to any preceding claim further comprising a signal generating unit which generates the request signal.

5. The remote control device according to any preceding claim, wherein the control unit performs a first determination of whether or not generating the request signal is necessary and stops operating the signal receiving unit according to a result of the first determination, and
performs a second determination of whether or not the transmission of the request signal is completed and operates the signal receiving unit again according to the result of the second determination.

6. The remote control device according to claim 5, wherein the control unit determines a time point when information according to the user's key input is input in order to determine whether or not the generating of the request signal is necessary.

7. The remote control device according to claim 5, wherein the control unit uses any one of a time point when the generation of the request signal is completed, a time point when the request signal is transmitted from the control unit to the signal transmitting-receiving unit, and a time point when the request signal is transmitted from the signal transmitting-receiving unit to the electronic device or relay device, in performing the second determination.

8. The remote control device according to any preceding claim, wherein the signal transmitting-receiving unit further comprises a switching unit which shuts off or opens a signal processing route of the signal receiving unit according to a control of the control unit.

9. A remote control method, comprising:
determining whether or not a request signal which requests for information necessary for controlling an electronic device is generated;
stopping operating a signal receiving unit, if the request signal is generated;
determining whether or not the transmission of the request signal is completed; and
operating the signal receiving unit, if the transmission of the request signal is completed.

10. The remote control method according to claim 9, wherein the determining whether or not the request signal is generated comprises determining whether or not there is information input from a user's key input.

11. The remote control method according to claim 9 or claim 10, wherein, the determining whether or not the transmission of the request signal is completed comprises determining a time point when the transmission of the request signal is completed by regularly checking a completion of the transmission at certain time intervals.

12. The remote control method according to any of claims 9 to 11, wherein the request signal is a short-distance wireless communication signal by any one communication method of Zigbee, bluetooth, IrDA, RF(Radio Frequency) and ultra-wide band communication (UWB) methods.

13. A display device comprising:
a signal transmitting-receiving unit which transmits a request signal which requests for information necessary for controlling an electronic device located nearly, and receives the information as a response to the request signal; and
a control unit which stops operating a signal receiving unit of the signal transmitting-receiving unit during transmission of the request signal, and operates the signal receiving unit when the transmission of the request signal is completed.
